# EUROPEAN PATENT SPECIFICATION

(11) **EP 4 375 933 B1**
(45) Date of publication and mention of the grant of the patent: **10.09.2025**
(21) Application number: 22208901.3
(22) Date of filing: 22.11.2022
(51) Int. Cl.: G06T 7/80

(54) **TRAINING METHOD, CALIBRATION METHOD AND SYSTEM, IMAGE PROCESSING METHOD, COMPUTER PROGRAM, COMPUTER-READABLE MEDIUM, CAMERA CALIBRATION SYSTEM AND ADVANCED DRIVING ASSISTANCE SYSTEM**
TRAININGSVERFAHREN, KALIBRIERVERFAHREN UND -SYSTEM, BILDVERARBEITUNGSVERFAHREN, COMPUTERPROGRAMM, COMPUTERLESBARES MEDIUM, KAMERAKALIBRIERUNGSSYSTEM UND FORTSCHRITTLICHES FAHRASSISTENZSYSTEM
PROCÉDÉ D'APPRENTISSAGE, PROCÉDÉ ET SYSTÈME D'ÉTALONNAGE, PROCÉDÉ DE TRAITEMENT D'IMAGE, PROGRAMME INFORMATIQUE, SUPPORT LISIBLE PAR ORDINATEUR, SYSTÈME D'ÉTALONNAGE DE CAMÉRA ET SYSTÈME D'AIDE À LA CONDUITE

(43) Date of publication of application: 29.05.2024
(73) Proprietor: TOYOTA JIDOSHA KABUSHIKI KAISHA, Aichi-Ken 471-8571 (JP)
(72) Inventor: MEIER, Sven, 1140 Brussels (BE); BAIBABAEV, Aziz, 1019 HB Amsterdam (NL)
(74) Representative: Cabinet Beau de Loménie

(56) References cited:
- CN-A- 115 170 435
- ZHAO HE ET AL: "A Simple Yet Effective Pipeline For Radial Distortion Correction", 2020 IEEE INTERNATIONAL CONFERENCE ON IMAGE PROCESSING (ICIP), IEEE, 25 October 2020 (2020-10-25), pages 878 - 882, XP033869193, DOI: 10.1109/ICIP40778.2020.9191107
- ZHU-CUN XUE ET AL: "Fisheye Distortion Rectification from Deep Straight Lines", ARXIV.ORG, CORNELL UNIVERSITY LIBRARY, 201 OLIN LIBRARY CORNELL UNIVERSITY ITHACA, NY 14853, 25 March 2020 (2020-03-25), XP081629422
- OLEKSANDR BOGDAN ET AL: "DeepCalib : a deep learning approach for automatic intrinsic calibration of wide field-of-view cameras", PROCEEDINGS OF THE 15TH ACM SIGGRAPH EUROPEAN CONFERENCE ON VISUAL MEDIA PRODUCTION , CVMP '18, 1 January 2018 (2018-01-01), New York, New York, USA, pages 1 - 10, XP055582923, ISBN: 978-1-4503-6058-6, DOI: 10.1145/3278471.3278479

## Description

### BACKGROUND OF THE INVENTION

### 1. Field of the Invention

The invention mainly relates to a computer-implemented training method for training a parameter prediction unit to predict one or more intrinsic parameters of a camera ; a computer-implemented calibration method for predicting one or more intrinsic parameter of a camera comprising training with said training method ; an image processing method comprising said training method, one or more computer program comprising instructions for carrying out said training method ; and a non-transitory computer readable medium having said one or more computer program.

### 2. Description of Related Art

Images produced by cameras include distortions. A main consequence of these distortions is that, when objects having straight lines are present in a scene, the images outputted by cameras and representing the scene may show these lines as curved lines, instead of straight lines.

To address this problem, computer-implemented rectification units have been proposed.

Such a rectification unit is a data processing unit configured to input a distorted input image, and to apply thereto a rectification function so as to output a calculated rectified image corresponding to the input image.

A rectification function is a function which, when applied to a distorted image, yields a rectified image. A rectified image, as known per se, is an image in which straight lines in the scene shown in the image are represented by straight lines in the image.

In most cases, the rectification function is based on an underlying representation of the projection function performed by the camera. This projection function is based on a geometrical model of the camera relative to the scene in front of the camera.

Examples of projection functions, and of the corresponding geometrical models are proposed for instance by Ref.[1] (listed below).

The projection function is defined by one or more parameters. These parameter(s), which are only related to the camera, are called 'the intrinsic parameter(s) of the camera.' By contrast, the extrinsic parameters are those which describe the camera's pose with respect to a 3D world coordinate system.

The intrinsic parameters include a distortion parameter, a focal length of the camera, and additional parameters such as the coordinates (cₓ, c_{y}) of the principal point of the camera, etc.

In the present document, it is assumed that a rectification unit requires at least one intrinsic parameter of the camera as an input in order to perform its rectification function so as to calculate a rectified image on the basis of the input image.

In the present disclosure, the following notations or conventions are used:

When a noun is written followed by '(s)', it means that the object or item indicated by the noun can be in the singular or plural form. Accordingly, the expression 'object(s)' means 'at least one object'. Furthermore, a sentence like 'Object(s) are present' includes the singular form, that is, it encompasses the case where a single object is present. 'Property(ies)' means 'property or properties'.

The term "comprising a" should be understood as being synonymous with "comprising at least one" unless otherwise stated.

When a function is calculated "based on a datum", the function may also be calculated based on one or more additional data. Consequently, 'based on' can be understood as 'based at least on'.

Determining the intrinsic parameters of a camera has traditionally been a complex task. Traditional calibration methods involve acquiring a sequence images of an object on which specific patterns or markings have been marked, the size of these patterns or markings being known very precisely, and performing various calculations to determine the intrinsic parameters. Such methods are cumbersome and in many cases impractical for some applications.

In other methods, such as the calibration method proposed by Ref.[2], a convolutional neural network is trained to predict the intrinsic parameters of the camera.

More precisely, in this case the neural network is trained using a training dataset which comprises input images and, for each input image, the corresponding values of the intrinsic parameters of the camera. However, due to this training method, the neural network may predict values for the intrinsic parameters which are not optimized for the rectification unit that will be used to rectify the input images.

Consequently, there remains a need for systems and methods that can be used to calibrate cameras very simply.

The following references disclose various technologies related to camera calibration methods and systems, or at least in the field of camera vision:
[1] João P. Barreto. "A Unifying Geometric Representation for Central Projection Systems". CVIU (2006).
[2] O. Bogdan, V. Eckstein, F. Rameau, and J.-C. Bazin, "DeepCalib: A deep learning approach for automatic intrinsic calibration of wide field-of-view cameras," in Proceedings of the ACM SIGGRAPH European Conference on Visual Media Production, 2018.
[3] Xue, Z., Xue, N., Xia, G. S., & Shen, W. (2019). "Learning to calibrate straight lines for fisheye image rectification". In Proceedings of the IEEE/CVF Conference on Computer Vision and Pattern Recognition (pp. 1643-1651).
[4] Fang, J., Vasiljevic, I., Guizilini, V., Ambrus, R., Shakhnarovich, G., Gaidon, A., & Walter, M. R. (2022, May). "Self-Supervised Camera Self-Calibration from Video". In 2022 International Conference on Robotics and Automation (ICRA) (pp. 8468-8475). IEEE.
[5] Christopher Mei, and Patrick Rives. "Single view point omnidirectional camera calibration from planar grids." ICRA 2007.
[6] V. Usenko, N. Demmel, and D. Cremers, "The double sphere camera model" in Proceedings of the International Conference on 3D Vision (3DV), 2018, (pp. 552-560).
[7] Szegedy, C., Vanhoucke, V., Ioffe, S., Shlens, J., & Wojna, Z. (2016). "Rethinking the inception architecture for computer vision". In Proceedings of the IEEE conference on computer vision and pattern recognition (pp. 2818-2826).
[8] Simonyan, K., & Zisserman, A. « Very deep convolutional networks for large-scale image recognition ». arXiv preprint arXiv:1409.1556, 2014.
[9] Zhou Wang, A.C. Bovik, H.R. Sheikh, and E.P. Simoncelli. "Image quality assessment: from error visibility to structural similarity." IEEE Transactions on Image Processing, 13(4):600-612, 2004.
[10] H. Zhao, Y. Shi, X. Tong, X. Ying and H. Zha, "A Simple Yet Effective Pipeline For Radial Distortion Correction," 2020 IEEE International Conference on Image Processing (ICIP), Abu Dhabi, United Arab Emirates, 2020, pp. 878-882, doi: 10.1109/ICIP40778.2020.9191107.
[11] Z. Xue, N. Xue, G. -S. Xia and W. Shen, "Learning to Calibrate Straight Lines for Fisheye Image Rectification," 2019 IEEE/CVF Conference on Computer Vision and Pattern Recognition (CVPR), Long Beach, CA, USA, 2019, pp. 1643-1651, doi: 10.1109/CVPR.2019.00174.

### SUMMARY OF THE INVENTION

In view of the above-mentioned problem, the objective of the present disclosure is to propose methods and systems which constitute a quick and simple solution to calibrate cameras.

In order to meet the above purpose, first, the following computer-implemented training method as defined in claim 1 is proposed. This method is a method for training a parameter prediction unit to predict at least one intrinsic parameter of a camera.

In this method, the parameter prediction unit is a convolutional neural network configured to input an input image and to output said at least one intrinsic parameter of the camera, and the rectification function is differentiable.

The method is disclosed in claim 1.

A neural-network-based parameter prediction unit can be trained in accordance with this method. Advantageously during exploitation (inference), the trained parameter prediction unit will then be capable of determining the values of the intrinsic parameter(s) of cameras, simply on the basis of a single image outputted by the camera.

In the above definition, a differentiable rectification function is any rectification function whose gradient with respect to the intrinsic parameters can be calculated, or at least estimated. In this calculation, the gradient may be calculated or estimated directly or implicitly, that is in that latter case, using an iterative algorithm.

The rectification unit may be configured to implement any differentiable rectification function, for instance even an approximately differentiable rectification function. An approximately differentiable rectification function is defined herein as a rectification function whose gradient can only be estimated (no method being available to calculate the exact value of the gradient). For instance, a rectification function which can be approximated by bilinear interpolation can be used to implement the rectification unit.

The methods and systems according to the present disclosure have been developed based on the finding that a convolutional neural network, that is, the parameter prediction unit, can learn by training how some features which appear in images should look like. Such features are preferably geometric features shown in the input image which is inputted into the parameter prediction unit. These features, in the real scene shown in the input images, are typically straight lines; for instance preferably an array of straight lines, such as the limits of the windows in a photo of a façade of a building, etc.

During training, the parameter prediction unit learns how such features should look like. In addition, during training, when such features appear distorted in the input image, the parameter prediction unit even learns to predict (that is, to determine) the values of the intrinsic parameter(s) of the camera, which cause these features to be distorted in the input image.

The training may be performed based on a loss function configured to calculate a loss value based on differences between the predicted rectified image and the desired rectified image (the ground-truth rectified image).

Various functions can be used to calculate that loss value. That loss value is usually calculated by summating individual per-pixel losses across all pixels of the input image.

For each pixel at a certain pixel location, the per-pixel loss may be obtained as the result of a function which compares pixel values at location(s) centered on the pixel location in the ground truth rectified image and the corresponding pixel values at the same location(s) in the predicted rectified image. Each per-pixel loss may preferably be calculated for instance using the log(cosh) function; however other functions such as structural similarity (the SSIM function defined by Ref.[9]), absolute differences between pixel values, etc., may be used as well.

The methods and systems of the present disclosure may be used to calculate various intrinsic parameters of a camera.

For instance, in some embodiments, the parameter prediction unit is configured to determine, as said at least one intrinsic parameter of the camera, at least one of a single focal length parameter and at least one distortion parameter, and optionally two principal points parameters (cx, cy) of the camera.

For instance, in some embodiments the training method is implemented using a rectification unit which is based on a unified model. The unified camera model is the parametric global central camera model defined by Ref.[4] (see beginning of section III.B). This model uses 5 parameters and can represent a diverse set of camera geometries.

An implementation of the unified model, proposed by Ref.[6], takes into account the following intrinsic parameters of cameras: two focal length parameters γₓ,γ_{y}, two principal points parameters cx, cy, and a distortion parameter ξ.

Advantageously, the proposed methods may be used for a broad variety of cameras. Accordingly in some embodiments, the training method is implemented to train a parameter prediction unit to predict intrinsic parameters of cameras having a wide field of view, for instance at least 120°, or even at least 150°, such as a fish-eye cameras.

In some embodiments, the parameter prediction unit comprises a convolutional-neural-network-based model trained to perform at least one image-based task, for instance segmentation, object classification, or the like, such as for instance an InceptionV3 model or a VGG16 model.

The inceptionV3 model is defined in in section 6 of Ref.[7]. The VGG16 model is the VGG model proposed by Ref.[8], in the embodiment comprising 16 layers. An image-based task is defined herein as any task for which the input comprises at least an image.

The model(s) which are part of the parameter prediction unit may advantageously be pre-trained model(s). For instance, Inceptionv3 model(s) pre-trained on the ImageNet dataset may be used.

In some variants of the embodiments described above, the parameter prediction unit comprises at least one head, each one of said at least one head comprising at least one fully connected layer, each one of said at least one head being configured to receive an embedding outputted by the model at step S22 and on this basis to output a single one of the at least one intrinsic parameter.

A head is defined herein as a calculation unit, in particular a neural-network based calculation unit.

More generally, the parameter prediction unit may have various architectures.

In the training method of claim 1, the parameter prediction unit comprises a plurality of parameter prediction sub-units, each sub-unit being a convolutional neural network, each sub-unit being configured, at step S221, to input the input image and to output respectively one of said at least one intrinsic parameter of the camera.

The parameter prediction unit comprises at least a first parameter prediction sub-unit and a second parameter prediction sub-unit, each sub-unit being a convolutional neural network; the first sub-unit being configured, at step S221, to input the input image and to output at least one first intrinsic parameter, which is at least one of said at least one intrinsic parameter of the camera; and the second sub-unit being configured, at step S221, to input the input image and said at least one first intrinsic parameter, and to output at least one second intrinsic parameter which is at least one of said at least one intrinsic parameter of the camera but is not one of said first intrinsic parameter of the camera.

In particular, in these latter embodiments, the parameter prediction unit may be configured so that, at step S221, said at least one first intrinsic parameter is inputted into an inner layer of the second sub-unit.

Advantageously, the parameter prediction unit trained according to one of the above-proposed methods can be used to predict, very quickly (in a single forward pass), the intrinsic parameter(s) of the camera which acquired the input image.

Accordingly, the present invention further includes a computer-implemented calibration method for predicting at least one intrinsic parameter of a camera as defined in claim 6. This calibration method comprises passing an input image through a parameter prediction unit trained with one of the above-proposed training methods so as to output said at least one intrinsic parameters of the camera having acquired the input image.

Advantageously, passing single image through the parameter prediction unit is indeed sufficient to obtain the intrinsic parameter(s) of the camera.

For the reasons explained above, the input image used to implement the above-defined camera calibration method and to calibrate a camera has to be selected preferably as an image which comprises some distinguishing features for which the system has learnt, during training, how these features should look like. For this reason, the input images which are used to calibrate a camera are preferably (and usually) images showing man-made objects, in particular buildings, etc.

Furthermore, thanks to the above-proposed calibration method, image processing methods which are based on (or even require) rectified images can be implemented.

The present invention therefore further encompasses an image processing method as defined in claim 7, comprising rectifying an input image based on at least one intrinsic parameter of a camera, calculated using one of the above-proposed calibration methods; and calculating an output datum, based on the rectified image.

The output datum can be of any type. It can be a semantic map, a depth map, a pose, a combination thereof, etc.

In particular implementations, the proposed methods are determined by computer program instructions.

Accordingly, another purpose the present invention is to propose one or more computer program(s) as defined in claim 8, comprising instructions which, when the instructions are executed by a computer, cause the computer to carry out the steps of one of the above-defined methods.

The computer program(s) may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present invention also includes a non-transitory computer readable medium as defined in claim 9, having the one or more above-defined computer program(s) stored thereon.

The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

In an unclaimed aspect, a camera calibration system for determining at least one intrinsic parameter of a camera is defined, the camera calibration system comprising a computer-readable medium having a computer program stored thereon, the computer program comprising instructions which, when the instructions are executed by a computer, cause the computer to carry out the steps of one of the above-presented calibration methods, the camera calibration system further comprising one or more processors configured to execute the computer program stored on the computer-readable medium.

The methods and systems of the present disclosure can be used for many applications: They can be used to simply calibrate cameras such as vehicle mounted-cameras such as vehicle interior cameras, building, facility and city wide CCTV cameras, etc.

In an unclaimed aspect, an advanced driving assistance system for a vehicle is defined, comprising the above-defined camera calibration system.

The present disclosure further includes a training system for training a parameter prediction unit. The training system may comprise one or more processors and a computer-readable medium; the computer-readable medium comprising computer instructions stored thereon, wherein the instructions, when executed by the one or more processors, cause the one or more processors to carry out the steps of one of the above-proposed training methods.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, and serve to explain the principles thereof.

### BRIEF DESCRIPTION OF THE DRAWINGS

Fig. 1 is a schematic view showing a vehicle comprising a camera calibration system CCS in accordance with the present disclosure;
Fig. 2 is a schematic representation of the functional units of the calibration system CCS represented on Fig.1;
Fig. 3 is a schematic diagram representing data flows through a parameter prediction unit and a rectification unit, in accordance with the present disclosure, either during training or during exploitation ;
Fig. 4A is a schematic diagram representing a parameter prediction unit, and data flows when the parameter prediction unit performs a prediction;
Fig.4B is a schematic diagram illustrating the steps of a surface identification method according to the present disclosure;
Fig.4C is a schematic diagram illustrating the steps of a surface identification method according to the present disclosure;
Fig.5 is a block diagram illustrating the steps of a parameter prediction unit training method according to the present disclosure;
Fig.6 is a block diagram illustrating the steps of a camera calibration method and of an image processing method according to the present disclosure;
Fig.7 is an image to be used as an input image in a calibration method according to the present disclosure; and
Fig.8 is a rectified image calculated thanks to an image processing method according to the present disclosure.

### DETAILED DESCRIPTION OF EMBODIMENTS

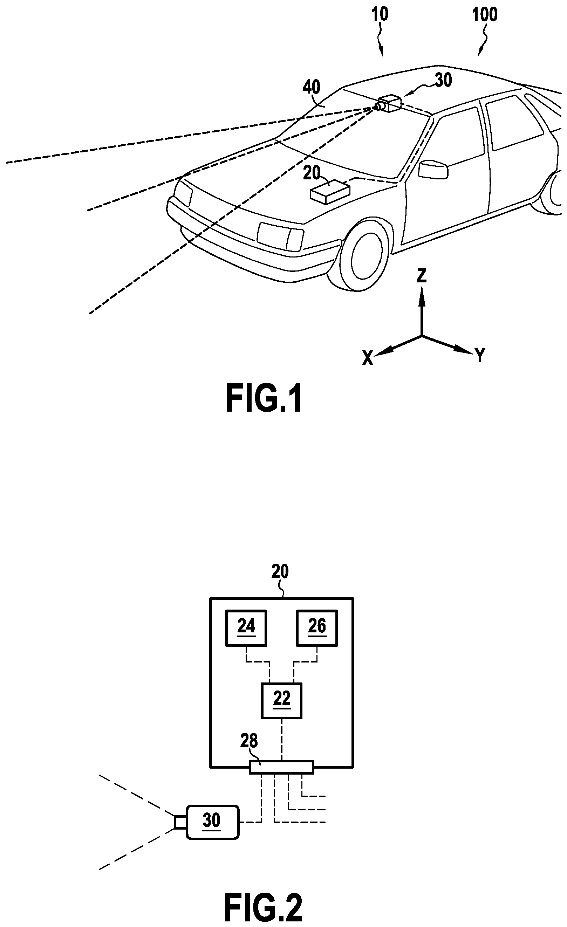

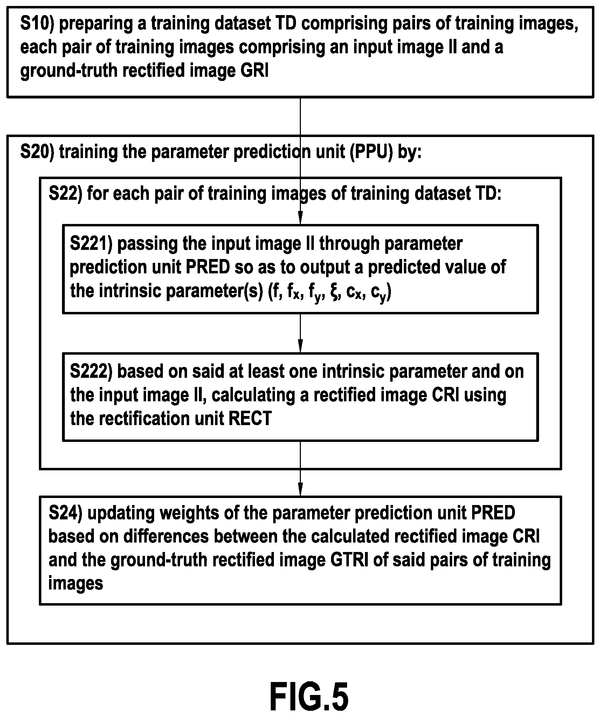

Camera calibration methods and systems, and training methods and systems for training parameter prediction units to predict values of intrinsic parameters of cameras, based on images acquired by the cameras, and which constitute exemplary embodiments of the present disclosure are now going to be presented in relation with Figs.1 to 8. Wherever possible, the same reference signs will be used throughout the figures to refer to the same or like parts or functional units.

As explained before, these methods and systems have mainly been developed in order to obtain a quick, simple solution to calibrate cameras.

Figure 1 shows a car 100 (an example of a vehicle) in which is mounted a driving assistance system 10 which forms an exemplary embodiment of the present invention.

The driving assistance system 10 (or, in short, the system 10) is, in the present case, an automated driving system comprising an electronic control unit (ECU) 20 and a camera 30. The camera 30 is mounted in car 100, and is fastened behind the windshield 40 thereof. Camera 30 can be a CCD camera, a CMOS camera, etc. It can operate in any wavelength range: infrared, visible, ultraviolet, etc.

While the methods and systems according to the present disclosure can be used to calibrate cameras having very broad fields of view, such as fish-eye cameras, the camera 30 represented on Fig.1 is a camera having a normal field of view (less than 60°).

On Fig.1, the car 100 is represented when the camera 30 acquires an image of the scene in front of car 100. This image will be used as an input image II to calibrate camera 30.

The material structure of the driving assistance system 10 is illustrated by Fig.2. ECU 20 has the hardware architecture of a computer. ECU 20 comprises a microprocessor 22, a random access memory (RAM) 24, a read only memory (ROM) 26, an interface 28. These hardware elements are optionally shared with other units of the driving assistance system 10. The interface 28 comprises a driver interface with a (not-shown) display to transmit information to the driver of the car 100, and interface connections with actuators and other components of the car. In particular, interface 28 comprises a connection with camera 30 so as to acquire images outputted by the camera.

At least two computer programs are stored in memory 26: a parameter prediction unit training program TP and a camera calibration program CP. The memory 26 further stores a training dataset TD prepared in order to train a parameter prediction unit according to the present disclosure.

The parameter prediction unit training program TP is a program comprising instructions which, when the instructions are executed by a computer, cause the computer to carry out the steps of a training method according to the present disclosure so as to train a parameter prediction unit to predict intrinsic parameters of cameras such as camera 30.

The camera calibration program CP is a program comprising instructions which, when the instructions are executed by a computer, cause the computer to carry out the steps of a calibration method according to the present disclosure which so as to calibrate camera 30 based on images acquired by camera 30.

The parameter prediction unit training program TP, the camera calibration program CP and the memory 26, are examples respectively of computer programs and a computer-readable recording medium pursuant to the present disclosure. The ECU 20, comprising the processor 22 and the memory 26, is an example of a camera calibration system according to the present disclosure.

### < Architecture >

The methods and systems according to the present disclosure mainly involve a parameter prediction unit configured to input an input image and to output said at least one intrinsic parameter of the camera, and a rectification unit configured to input the input image, and, further based on the intrinsic parameter(s) of the camera, to output a rectified image corresponding to the input image.

The parameter prediction unit, noted PRED, is preferably implemented as a neural-network.

The parameter prediction unit PRED may have several architectures.

The parameter prediction unit PRED comprises a plurality of parameter prediction sub-units, at least one sub-unit being a convolutional neural network, each sub-unit having a specific function and being configured to exchange data with at least one other sub-unit.

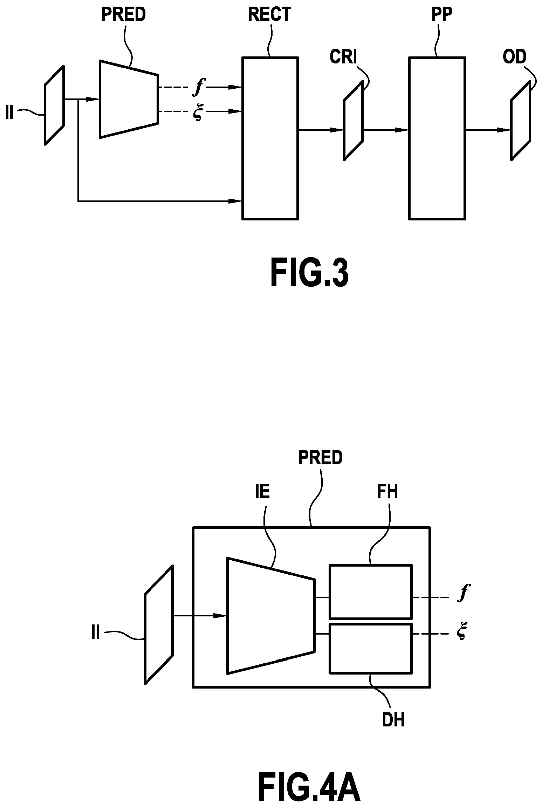

The architecture of the parameter prediction unit PRED may be based for instance on any one of the SingleNet, DualNet or SeqNet architectures described by Ref.[2] (refer in particular to Fig.3).

For instance, as represented on Fig.4A, the parameter prediction unit PRED may have the SingleNet architecture.

In that case, the parameter prediction unit PRED may for instance include a first sub-unit which is an image encoder IE, coupled downstream with two dedicated parameter prediction heads. A prediction head is herein a neural network which includes at least a fully connected layer.

The image encoder IE is configured to input an input image II and, on this basis, to output an embedding E which is an encoded representation of the input image II.

The two dedicated parameter prediction heads are respectively a focal length prediction head FH and a distortion prediction head DH. Each one of these prediction heads is configured to input the embedding E and on this basis, to output one of the intrinsic parameter(s) which have to be calculated. Accordingly, the prediction heads FH and DH output respectively the focal length f and the distortion ξ.

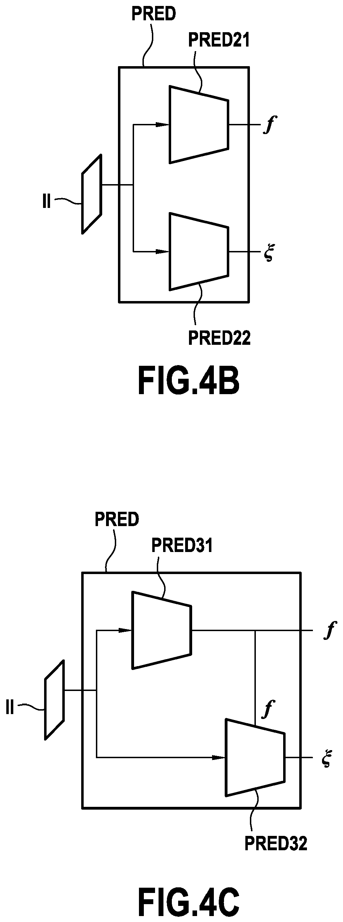

In another embodiment represented on Fig.4B, the parameter prediction unit PRED has the DualNet architecture and comprises two sub-units PRED21 and PRED22.

In this embodiment, the two sub-units PRED21 and PRED22 are two convolutional neural networks. Each of them is configured to the input image II and on this basis, to output respectively the focal length f (for PRED21) and the distortion ξ (for PRED22).

In another embodiment represented on Fig.4C, the parameter prediction unit PRED has the SeqNet architecture and comprises two sub-units PRED31 and PRED32.

In this embodiment, the two sub-units PRED31 and PRED32 are two convolutional neural networks PRED31 and PRED32. Each of them is configured to the input image II.

On this basis, the first sub-unit PRED31 predicts the focal length f. This predicted value f is transmitted to an intermediate layer of the second sub-unit PRED32. On the basis of the input image II and the predicted focal length f, the second neural network PRED32 then predicts the distortion value ξ.

The architecture of the prediction unit shown on Fig.4A, with an image encoder IE coupled downstream with one or more prediction heads (two prediction heads FH and DH, in the embodiment of Fig.4A), may be used either for the whole parameter prediction unit PRED itself, as shown on Fig.4A, or for any sub-unit of a parameter prediction unit tasked to output at least one intrinsic parameter of the camera based on an input image. Accordingly, this architecture could be used for each one of sub-units PRED21, PRED22, PRED 31, PRED32.

As shown on Fig.3 in an exemplary embodiment, the parameter prediction unit PRED may be coupled downstream with a post-processing unit PP to perform various image-based functions, in particular image-based functions which require a rectified images as an input (for instance, calculation of depth maps, etc.).

In such embodiment, the calculated rectified image CRI is transmitted to the post-processing unit PP which, on this basis, calculates an output datum OD.

Although this is not shown on Fig.3, the post-processing unit PP may use other data in addition to the calculated rectified image CRI (for instance lidar and/or radar data, etc.), to calculate the output datum OD.

In order to train the parameter prediction unit PRED, a rectification unit, called RECT, is used (Fig.3).

Any rectification unit can be used in this purpose, subject to the condition however that the rectification function performed by the RECT unit be differentiable.

The rectification unit RECT is a data processing unit which applies a known (differentiable) rectification function to the input image II.

It can also be a neural-network-based data processing unit, trained by machine learning.

As known per se, the inputs of such a rectification unit RECT are the input image II to be rectified, and the value(s) of the one or more intrinsic parameters of the camera that are taken into account by the rectification unit.

Accordingly, the architecture of the prediction model has to be defined so that the prediction model outputs as many values as the number of camera parameters taken as inputs by the selected rectification unit RECT.

Advantageously, the methods and systems according to the present disclosure may be used with a broad variety of rectification units. Accordingly, the methods and systems according to the present disclosure may predict a broad variety of intrinsic parameters of cameras.

The intrinsic parameters include at least a focal length parameter (γ), or respectively two focal length parameters γx, γy, two principal points parameters cx, cy, and/or a distortion parameter ξ, etc.

In particular, the methods and systems according to the present disclosure have proven to be particularly efficient when used with rectification units using a projection model based on a unified camera model. A unified camera model is a projection model which uses 4 or 5 parameters: one (γ) or respectively two focal length parameters γx, γy, two principal points parameters cx, cy, and a distortion parameter ξ. Such camera model is proposed for instance by Ref. [6].

It should be noted that although the focal length of a camera is traditionally difficult to determine during calibration unless information about the scale of the scene shown in the calibration image(s) is known beforehand, the methods and systems of the present disclosure are usually capable of providing an estimate of the focal length f of the camera.

The accuracy of this prediction depends on the similarity between the input image and the input images of the training dataset used to train the prediction unit PRED.

In addition to the focal length, the principal points of the camera can also be estimated using the methods and systems of the present disclosure. In this case as well, the accuracy of the prediction depends on whether the prediction unit PRED has been trained or not on input images in which the principal points of the camera took up various values.

In some embodiments, the prediction unit may be configured to predict only one parameter, for instance a distortion parameter. In other embodiments, the prediction unit may be configured to predict only two parameters, for instance a distortion parameter and a focal length. Indeed, the prediction accuracy of the prediction unit is generally all the better when the number of parameters is small.

### < Training >

According to the present disclosure, the prediction unit PRED is trained in a coupled configuration in which it is coupled to the rectification unit RECT.

The first operation for preparing the training is to carry out the step S10 of preparing a training dataset (TD).

This dataset TD should comprise pairs of training images, each pair of training images comprising an input image II and a ground-truth rectified image GRI; the ground-truth rectified image GRI is a rectified image which corresponds to the input image of the pair of training images.

The ground-truth rectified image GRI is essentially the same image as the input image II, but which has been rectified so that straight lines in the scene shown on the input image II are represented by straight segments (that is, aligned pixels) in the ground truth rectified image GRI.

The training dataset part of the input images are camera images, that is, images acquired by a real camera and representing the scene in front of the camera.

However, in some embodiments, in the training dataset part of the input images are calculated (that is, a synthetic) images.

In this latter case, these latter input images can be distorted images which have been calculated based on primary images, by applying distortions to these primary images. The primary images are of course in this context rectified images, which can be either camera images in which straight lines in the scene are represented as straight segments and which therefore do not need to be rectified (by computation), or they can be synthetic (calculated) rectified images, possibly in some cases calculated based on a 3D digital model.

It should be noted that in the training dataset the pairs of training images should preferably be distributed so as to cover all the possible variations of the intrinsic parameters.

In this purpose, the training dataset can be advantageously be prepared by including therein pairs of training images comprising a rectified image (primary image), and a synthetic input image calculated so that the rectified image be the output of the rectification unit RECT, for a specific value of the intrinsic parameters chosen beforehand.

In this case indeed, generating the pairs of training images in this manner makes it possible to make sure that in the training dataset, the values of the intrinsic parameters which have to be used to correctly rectify the input images of the training pairs of the dataset (which values will therefore have to be predicted by the parameter prediction unit PRED) are adequately distributed over the ranges of possible values for the intrinsic parameters.

For instance, in some embodiments the principal point coordinates (cₓ,c_{y}) are used as intrinsic parameters which has to be determined. In such embodiments, it is useful to include in the training dataset pairs of training images, calculated so that the principal point coordinates (cₓ,c_{y}) take up different values for the various pairs of training images.

For instance, such pairs of training images comprising synthetic images as input images may be generated based on panorama images. A dataset creation method showing how to proceed in this case is proposed for instance by Ref.[2].

Once the training dataset TD has been prepared, the parameter prediction unit PRED is trained by performing a training step S20. This training step S20 comprises the following steps S22 and S24:

S22) for each pair (II, GRI) of training images of the training dataset TD:
S221) passing the input image II of the pair of training images through the training step S20). The training step S20) therefore outputs a predicted value for the intrinsic parameters (f,ξ) of the camera, based on the input image II.
S222) based on the intrinsic parameter(s) f and ξ calculated at step S221 and on the input image II, calculating a rectified image CRI with the rectification unit RECT.
Steps S221 and S222 are performed for all the pairs of training images. Consequently, at the end of step S22, for each pair of training images (II,GRI), a pair of images (CRI,GRI) comprising the calculated rectified image CRI and the corresponding ground truth rectfied image GRI is obtained.

The weights of the parameter prediction unit PRED are then updated at step S24:
At step S24, the weights of the parameter prediction unit PRED are updated based on differences between the calculated rectified image CRI and the ground-truth rectified image GRI of said pairs of training images.

### < Exploitation >

Once the parameter prediction unit PRED has been trained, it can be exploited to calibrate cameras, that is, to determine the intrinsic parameter(s) of cameras.

Such calibration can be done by performing the step (S100) of passing a 'calibration input image' CII, used only for calibration, through the parameter prediction unit PRED: Based only on this image, the parameter prediction unit PRED directly outputs the intrinsic parameters of the camera.

Of course, step S100 can be repeated two or more times, based on several calibration input images CII; in this case, the intrinsic parameters of the camera may be calculated as a mean value of the different values of the the intrinsic parameters, obtained respectively for the various calibration input images CII that have been used.

More broadly, the methods and systems according to the present disclosure can be applied to an image processing method which involves rectified images.

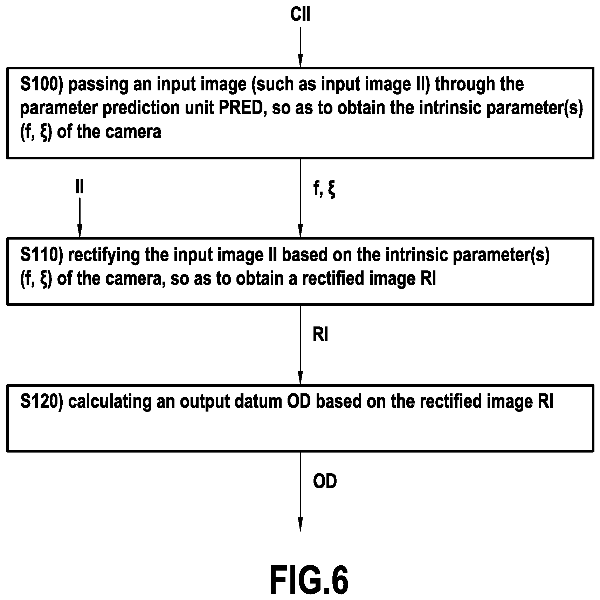

In this case, as shown on Fig.6, the image processing method may comprise:
S110) rectifying an input image II based on the intrinsic parameter(s) of a camera (using the rectification unit), this or these parameter(s) being the parameter(s) calculated using a calibration method according to the present disclosure (e.g., at the above-described step S100); and then
S120) calculating an output datum OD based on the rectified image RI. The output datum (OD) can be a semantic map, a depth map, a pose, etc.

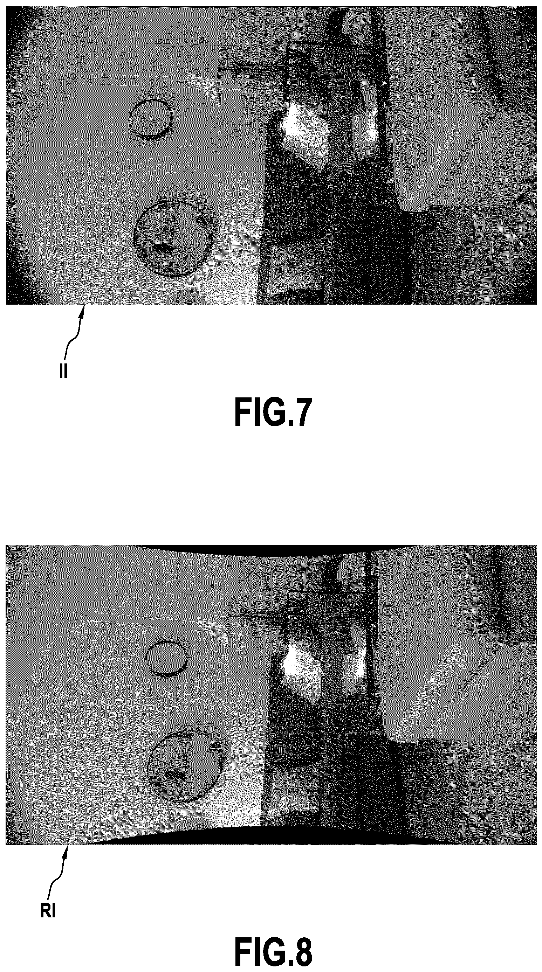

Figs.7 and 8 show the effect of step S110. Fig.7 shows an image which has to be rectified, that is, an input image II. In this image, due to the physical features of the camera used to acquire the image, straight lines in the scene (for instance, the sides of the coffee table, or the edges of the lampshade) are not represented by straight lines in the input image II.

To correct this, the input image II is passed through the rectification unit, which outputs the rectified image RI shown on Fig.8.

As shown on Fig.8, the straight lines in the scene now appear as straight lines or segments in the rectified image RI.

Advantageously, the proposed method achieves state of the art or better than state of the art performance while being particularly simple to implement. Although the present disclosure herein has been described with reference to particular embodiments, it is to be understood that these embodiments are merely illustrative of the principles and applications of the present disclosure. It is intended that the specification and examples be considered as exemplary only, with a true scope of the disclosure being indicated by the following claims.

## Claims

1. A computer-implemented training method for training a parameter prediction unit (PRED) to predict a plurality of intrinsic parameters (f,fₓ,f_{y},ξ,cₓ,c_{y}) of a camera (30);
the parameter prediction unit (PRED) being a convolutional neural network configured to input an input image (II) and to output said plurality of intrinsic parameters of the camera;
a rectification unit (RECT) being a data processing unit configured to input an input image (II), and, further based on said plurality of intrinsic parameters (f,fₓ,f_{y},ξ,cₓ,c_{y}) of the camera (30), to apply a rectification function so as to output a calculated rectified image (CRI) corresponding to the input image (II);
the rectification function being differentiable;
the method comprising:
S10) preparing a training dataset (TD) comprising pairs of training images (II,GRI), each pair of training images (II,GRI) comprising an input image (II) and a ground-truth rectified image (GRI), the ground-truth rectified image (GRI) being a rectified image corresponding to the input image of the pair of training images (II,GRI);
S20) training the parameter prediction unit (PRED) by:
S22) for each pair of training images (II,GRI) of the training dataset (TD):
S221) passing the input image (II) through the parameter prediction unit (PRED) so as to output a predicted value of said plurality of intrinsic parameters (f,fₓ,f_{y},ξ,cₓ,c_{y}) of the camera for the considered input image (II), and
S222) based on said a plurality of intrinsic parameters and on the input image (II), calculating a rectified image (CRI) using the rectification unit (RECT); and,
S24) updating weights of the parameter prediction unit (PRED) based on differences between the calculated rectified image (CRI) and the ground-truth rectified image (GRI) of said pairs of training images (II,GRI), wherein:
the parameter prediction unit (PRED) is configured to determine, as said plurality of intrinsic parameters of the camera (30): a focal length parameter (f) or respectively two focal length parameters (fx,fy), a distortion parameter (ξ) of the camera (30), and two principal points parameters (cₓ, c_{y}) of the camera (30),
the input image (II) is a camera image acquired by a real camera and representing a scene in front of the camera, and
the ground-truth rectified image (GRI) is an image that has been rectified from the input image (II) so that straight lines in the scene shown on the input image (II) are represented by straight segments, **characterized in that**
the parameter prediction unit (PRED) comprises a plurality of parameter prediction sub-units (PRED21, PRED22), each sub-unit being a convolutional neural network, each sub-unit being configured, at step S221, to input the input image (II) and to output respectively one of said plurality of intrinsic parameters (f,fx,fy, ξ ,cx,cy) of the camera (30).

2. A training method according to claim 1, wherein the parameter prediction unit (PRED) comprises a convolutional-neural-network-based model trained to perform at least one image-based task, for instance segmentation, object classification, or the like, such as for instance an InceptionV3 model or a VGG16 model.

3. A training method according to claim 2, wherein the parameter prediction unit (PRED) comprises at least one head (FH,DH), each one of said at least one head comprising at least one fully connected layer, each one of said at least one head being configured to receive an embedding (E) outputted by the model at step S22 and on this basis to output a single one of the plurality of intrinsic parameters (f,fₓ,f_{y},ξ,cₓ,c_{y}).

4. The training method according to any one of claims 1 to 3, wherein
the parameter prediction unit (PRED) comprises at least a first parameter prediction sub-unit (PRED31) and a second parameter prediction sub-unit (PRED32), each sub-unit being a convolutional neural network;
the first sub-unit (PRED31) being configured, at step S221, to input the input image (II) and to output at least one first intrinsic parameter (f), which is at least one of said plurality of intrinsic parameters (f,fₓ,f_{y},ξ,cₓ,c_{y}) of the camera (30); and
the second sub-unit (PRED32) being configured, at step S221, to input the input image (II) and said at least one first intrinsic parameter (f), and to output at least one second intrinsic parameter (ξ) which is at least one of said plurality of intrinsic parameters (f,fₓ,f_{y},ξ,cₓ,c_{y}) of the camera (30) but is not one of said first instrinsic parameter (f) of the camera.

5. The training method according to claim 4, wherein at step S221, said at least one first intrinsic parameter (f) is inputted into an inner layer of the second sub-unit (PRED32).

6. A computer-implemented calibration method for predicting a plurality of intrinsic parameters (f,fₓ,f_{y},ξ,cₓ,c_{y}) of a camera (30); the method comprising passing an input image (II) through a parameter prediction unit (PRED) trained with a method according to any one of claims 1 to 5 so as to output said plurality of intrinsic parameters (f,fₓ,f_{y},ξ,cₓ,c_{y}) of the camera (30) having acquired the input image (II).

7. An image processing method comprising:
rectifying an input image (II) based on a plurality of intrinsic parameters of a camera, calculated using a calibration method according to claim 6; and
calculating an output datum (OD), based on the rectified image (RI).

8. One or more computer program(s) comprising instructions which, when the instructions are executed by a computer, cause the computer to carry out the steps of a method according to any one of claims 1 to 7.

9. A non-transitory computer readable medium, having the one or more computer program(s) according to claim 8 stored thereon.

## Patentansprüche

1. Computerimplementiertes Trainingsverfahren zum Trainieren einer Parametervorhersageeinheit (PRED), um mehrere intrinsische Parameter (f, fₓ, f_{y}, ξ, cₓ, c_{y}) einer Kamera (30) vorherzusagen,
wobei die Parametervorhersageeinheit (PRED) ein neuronales Faltungsnetz ist, das dafür konfiguriert ist, ein Eingabebild (II) einzugeben und die mehreren intrinsischen Parameter der Kamera auszugeben,
eine Berichtigungseinheit (RECT), die eine Datenverarbeitungseinheit ist, die dafür konfiguriert ist, ein Eingabebild (II) einzugeben und ferner basierend auf den mehreren intrinsischen Parametern (f, fₓ, f_{y}, ξ, cₓ, c_{y}) der Kamera (30) eine Berichtigungsfunktion anzuwenden, so dass ein berechnetes berichtigtes Bild (CRI) ausgegeben wird, das dem Eingabebild (II) entspricht,
wobei die Berichtigungsfunktion differenzierbar ist,
wobei das Verfahren Folgendes umfasst:
S10) Vorbereiten eines Trainingsdatensatzes (TD), der Paare aus Trainingsbildern (II, GRI) umfasst, wobei jedes Paar aus Trainingsbildern (II, GRI) ein Eingabebild (II) und ein berichtigtes Ground-Truth-Bild (GRI) umfasst, wobei das berichtigte Ground-Truth-Bild (GRI) ein berichtigtes Bild ist, das dem Eingabebild des Paares aus Trainingsbildern (II, GRI) entspricht,
S20) Trainieren der Parametervorhersageeinheit (PRED) durch Folgendes :
S22) für jedes Paar aus Trainingsbildern (II, GRI) des Trainingsdatensatzes (TD):
S221) Leiten des Eingabebildes (II) durch die Parametervorhersageeinheit (PRED), so dass ein vorhergesagter Wert der mehreren intrinsischen Parameter (f, fₓ, f_{y}, ξ, cₓ, c_{y}) der Kamera für das betrachtete Eingabebild (II) ausgegeben wird, und
S222) Berechnen eines berichtigten Bildes (CRI) unter Verwendung der Berichtigungseinheit (RECT), basierend auf den mehreren intrinsischen Parametern und auf dem Eingabebild (II), und
S24) Aktualisieren von Gewichtungen der Parametervorhersageeinheit (PRED), basierend auf Differenzen zwischen dem berechneten berichtigten Bild (CRI) und dem berichtigten Ground-Truth-Bild (GRI) des Paares aus Trainingsbildern (II, GRI), wobei:
die Parametervorhersageeinheit (PRED) dafür konfiguriert ist, Folgendes als die mehreren intrinsischen Parameter der Kamera (30) zu bestimmen: einen Brennweiteparameter (f) oder entsprechend zwei Brennweiteparameter (fₓ, f_{y}), einen Verzerrungsparameter (ξ) der Kamera (30) und zwei Hauptpunktparameter (cₓ, c_{y}) der Kamera (30),
wobei das Eingabebild (II) ein Kamerabild ist, das durch eine echte Kamera aufgenommen wird und eine Szene vor der Kamera darstellt, und
das berichtigte Ground-Truth-Bild (GRI) ein Bild ist, das aus dem Eingabebild (II) berichtigt wurde, so dass gerade Linien in der Szene, die in dem Eingabebild (II) gezeigt sind, durch gerade Segmente dargestellt werden, **dadurch gekennzeichnet, dass**
die Parametervorhersageeinheit (PRED) mehrere Parametervorhersage-Teileinheiten (PRED21, PRD22) umfasst, wobei jede Teileinheit ein neuronales Faltungsnetz ist, jede Teileinheit dafür konfiguriert ist, in Schritt S221 das Eingabebild (II) einzugeben und entsprechend einen der mehreren intrinsischen Parameter (f, fₓ, f_{y}, ξ, cₓ, c_{y}) der Kamera (30) auszugeben.

2. Trainingsverfahren nach Anspruch 1, wobei die Parametervorhersageeinheit (PRED) ein Modell auf der Basis eines neuronalen Faltungsnetzes umfasst, um mindestens eine bildbasierte Aufgabe durchzuführen, zum Beispiel Segmentierung, Objektklassifizierung oder dergleichen, wie zum Beispiel ein InceptionV3-Modell oder ein VGG16-Modell.

3. Trainingsverfahren nach Anspruch 2, wobei die Parametervorhersageeinheit (PRED) mindestens einen Kopf (FH, DH) umfasst, wobei jeder des mindestens einen Kopfes mindestens eine vollständig verbundene Schicht umfasst, wobei jeder des mindestens einen Kopfes dafür konfiguriert ist, eine Einbettung (E) zu empfangen, die in Schritt S22 von dem Modell ausgegeben wird, und auf dieser Basis einen einzelnen der mehreren intrinsischen Parameter (f, fₓ, f_{y}, ξ, cₓ, c_{y}) auszugeben.

4. Trainingsverfahren nach einem der Ansprüche 1 bis 3, wobei
die Parametervorhersageeinheit (PRED) mindestens eine erste Parametervorhersage-Teileinheit (PRED31) und eine zweite Parametervorhersage-Teileinheit (PRED32) umfasst, wobei jede Teileinheit ein neuronales Faltungsnetz ist,
die erste Teileinheit (PRED31) dafür konfiguriert ist, in Schritt S221 das Eingabebild (II) einzugeben und mindestens einen ersten intrinsischen Parameter (f) auszugeben, der mindestens einer der mehreren intrinsischen Parameter (f, fₓ, f_{y}, ξ, cₓ, c_{y}) der Kamera (30) ist, und
die zweite Teileinheit (PRED32) dafür konfiguriert ist, in Schritt S221 das Eingabebild (II) einzugeben und mindestens einen zweiten intrinsischen Parameter (ξ) auszugeben, der mindestens einer der mehreren intrinsischen Parameter (f, fₓ, f_{y}, ξ, cₓ, c_{y}) der Kamera (30), jedoch nicht einer des ersten intrinsischen Parameter (f) der Kamera ist.

5. Trainingsverfahren nach Anspruch 4, wobei der mindestens eine erste intrinsische Parameter (f) in Schritt S221 in eine innere Schicht der zweiten Teileinheit (PRED32) eingegeben wird.

6. Computerimplementiertes Kalibrierungsverfahren zum Vorhersagen mehrerer intrinsischer Parameter (f, fₓ, f_{y}, ξ, cₓ, c_{y}) einer Kamera (30), wobei das Verfahren das Leiten eines Eingabebildes (II) durch eine Parametervorhersageeinheit (PRED) umfasst, die mit einem Verfahren nach einem der Ansprüche 1 bis 5 trainiert ist, so dass die mehreren intrinsischen Parameter (f, fₓ, f_{y}, ξ, cₓ, c_{y}) der Kamera (30) ausgegeben werden, die das Eingabebild (II) aufgenommen hat.

7. Bildverarbeitungsverfahren, Folgendes umfassend:
Berichtigen eines Eingabebildes (II), basierend auf mehreren intrinsischen Parametern einer Kamera, die unter Verwendung eines Kalibrierungsverfahrens nach Anspruch 6 berechnet wurden, und
Berechnen eines Ausgabedatums (OD), basierend auf dem berichtigten Bild (RI).

8. Ein oder mehrere Computerprogramme, Anweisungen umfassend, die bei Ausführung durch einen Computer den Computer veranlassen, die Schritte eines Verfahrens nach einem der Ansprüche 1 bis 7 auszuführen.

9. Nicht-flüchtiges computerlesbares Medium, auf dem das eine oder die mehreren Computerprogramme nach Anspruch 8 gespeichert sind.

## Revendications

1. Procédé d'entraînement mis en œuvre par ordinateur pour entraîner une unité de prédiction de paramètre (PRED) pour prédire une pluralité de paramètres intrinsèques (f, fₓ, f_{y}, ξ, cₓ, c_{y}) d'une caméra (30) ;
l'unité de prédiction de paramètre (PRED) étant un réseau neuronal circonvolutionnaire configuré pour entrer une image d'entrée (II) et pour délivrer ladite pluralité de paramètres intrinsèques de la caméra ;
une unité de rectification (RECT) qui est une unité de traitement de données configurée pour entrer une image d'entrée (II), et, en outre sur la base de ladite pluralité de paramètres intrinsèques (f, fₓ, f_{y}, ξ, cₓ, c_{y}) de la caméra (30), pour appliquer une fonction de rectification de façon à délivrer une image rectifiée calculée (CRI) correspondant à l'image d'entrée (II) ;
la fonction de rectification étant différentiable ;
le procédé comprenant :
S10) préparation d'un ensemble de données d'entraînement (TD) comprenant des paires d'images d'entraînement (II, GRI), chaque paire d'images d'entraînement (II, GRI) comprenant une image d'entrée (II) et une image rectifiée de réalité du terrain (GRI), l'image rectifiée de réalité du terrain (GRI) étant une image rectifiée correspondant à l'image d'entrée de la paire d'images d'entraînement (II, GRI) ;
S20) entraînement de l'unité de prédiction de paramètre (PRED) par :
S22) pour chaque paire d'images d'entraînement (II, GRI) de l'ensemble de données d'entraînement (TD) :
S221) passage de l'image d'entrée (II) par l'unité de prédiction de paramètre (PRED) de façon à délivrer une valeur prédite de ladite pluralité de paramètres intrinsèques (f, fₓ, f_{y}, ξ, cₓ, c_{y}) de la caméra pour l'image d'entrée considérée (II), et
S222) sur la base de ladite pluralité de paramètres intrinsèques et de l'image d'entrée (II), calcul d'une image rectifiée (CRI) en utilisant l'unité de rectification (RECT) ; et,
S24) mise à jour de pondérations de l'unité de prédiction de paramètre (PRED) sur la base de différences entre l'image rectifiée calculée (CRI) et l'image rectifiée de réalité de terrain (GRI) desdites paires d'images d'entraînement (II, GRI), selon lequel :
l'unité de prédiction de paramètre (PRED) est configurée pour déterminer, comme dite pluralité de paramètres intrinsèques de la caméra (30) : un paramètre de longueur focale (f) ou respectivement deux paramètres de longueur focale (fₓ, f_{y}), un paramètre de distorsion (ξ) de la caméra (30), et deux paramètres de points principaux (cₓ, c_{y}) de la caméra (30),
l'image d'entrée (II) est une image de caméra acquise par une caméra réelle et représentant une scène devant la caméra, et
l'image rectifiée de réalité du terrain (GRI) est une image qui a été rectifiée à partir de l'image d'entrée (II) de telle sorte que des lignes droites dans la scène montrée sur l'image d'entrée (II) sont représentées par des segments droits, **caractérisé en ce que**
l'unité de prédiction de paramètre (PRED) comprend une pluralité de sous-unités de prédiction de paramètre (PRED21, PRED22), chaque sous-unité étant un réseau neuronal circonvolutionnaire, chaque sous-unité étant configurée, à l'étape S221, pour entrer l'image d'entrée (II) et pour délivrer de manière respective un paramètre de ladite pluralité de paramètres intrinsèques (f, fₓ, f_{y}, ξ, cₓ, c_{y}) de la caméra (30).

2. Procédé d'entraînement selon la revendication 1, selon lequel l'unité de prédiction de paramètre (PRED) comprend un modèle basé sur un réseau neuronal circonvolutionnaire entraîné pour réaliser au moins une tâche basée sur l'image, par exemple une segmentation, un classement d'objet, ou équivalent, tel que par exemple un modèle InceptionV3 ou un modèle VGG16.

3. Procédé d'entraînement selon la revendication 2, selon lequel l'unité de prédiction de paramètre (PRED) comprend au moins un en-tête (FH, DH), chacun dudit au moins un en-tête comprenant au moins une couche entièrement connectée, chacun dudit au moins un en-tête étant configuré pour recevoir un élément intégré (E) délivré par le modèle à l'étape S22 et sur cette base pour délivrer un unique paramètre de la pluralité de paramètres intrinsèques (f, fₓ, f_{y}, ξ, cₓ, c_{y}).

4. Procédé d'entraînement selon l'une quelconque des revendications 1 à 3, selon lequel
l'unité de prédiction de paramètre (PRED) comprend au moins une première sous-unité de prédiction de paramètre (PRED31) et une deuxième sous-unité de prédiction de paramètre (PRED32), chaque sous-unité étant un réseau neuronal circonvolutionnaire ;
la première sous-unité (PRED31) étant configurée, à l'étape S221, pour entrer l'image d'entrée (II) et pour délivrer au moins un premier paramètre intrinsèque (f), qui est au moins un de ladite pluralité de paramètres intrinsèques (f, fₓ, f_{y}, ξ, cₓ, c_{y}) de la caméra (30) ; et
la deuxième sous-unité (PRED32) étant configurée, à l'étape S221, pour entrer l'image d'entrée (II) et ledit au moins un premier paramètre intrinsèque (f), et pour délivrer au moins un deuxième paramètre intrinsèque (ξ) qui est au moins un de ladite pluralité de paramètres intrinsèques (f, fₓ, f_{y}, ξ, cₓ, c_{y}) de la caméra (30) mais n'est pas un dudit premier paramètre intrinsèque (f) de la caméra.

5. Procédé d'entraînement selon la revendication 4, selon lequel, à l'étape S221, ledit au moins un premier paramètre intrinsèque (f) est entré dans une couche intérieure de la deuxième sous-unité (PRED32).

6. Procédé d'étalonnage mis en œuvre par ordinateur pour prédire une pluralité de paramètres intrinsèques (f, fₓ, f_{y}, ξ, cₓ, c_{y}) d'une caméra (30) ; le procédé comprenant le passage d'une image d'entrée (II) par une unité de prédiction de paramètre (PRED) entraînée avec un procédé selon l'une quelconque des revendications 1 à 5 de façon à délivrer ladite pluralité de paramètres intrinsèques (f, fₓ, f_{y}, ξ, cₓ, c_{y}) de la caméra (30) ayant acquis l'image d'entrée (II).

7. Procédé de traitement d'image comprenant :
la rectification d'une image d'entrée (II) sur la base d'une pluralité de paramètres intrinsèques d'une caméra, calculés en utilisant un procédé d'étalonnage selon la revendication 6 ; et
le calcul d'une donnée de sortie (OD), sur la base de l'image rectifiée (RI).

8. Un ou plusieurs programmes informatiques comprenant des instructions qui, quand les instructions sont exécutées par un ordinateur, amènent l'ordinateur à réaliser les étapes d'un procédé selon l'une quelconque des revendications 1 à 7.

9. Support non-transitoire lisible par ordinateur, ayant les un ou plusieurs programmes informatiques selon la revendication 8 stockés dessus.
